Europäisches Patentamt

European Patent Office

Office européen des brevets

(11) Publication number: **0 209 125 B1**

(12) EUROPEAN PATENT SPECIFICATION

(45) Date of publication of patent specification: **18.03.92**   (51) Int. Cl.5: **B60C 1/00**, B60C 11/00

(21) Application number: **86109772.3**

(22) Date of filing: **16.07.86**

(54) **Pneumatic tire having radially varying tread composition.**

(30) Priority: **17.07.85 JP 158712/85**

(43) Date of publication of application:
**21.01.87 Bulletin 87/04**

(45) Publication of the grant of the patent:
**18.03.92 Bulletin 92/12**

(84) Designated Contracting States:
**DE GB**

(56) References cited:
**EP-A- 0 097 787**
**EP-A- 0 142 857**
**GB-A- 2 058 687**

**KIRK-OTHMER "Encyclopedia of Chemical Technology", 3rd edition, vol. 8, 1979; JOHN WILEY & SONS, New York, Chichester, Brisbane, Toronto, pages 587-589**

(73) Proprietor: **Bridgestone Corporation**
**10-1, Kyobashi 1-Chome Chuo-Ku**
**Tokyo 104(JP)**

(72) Inventor: **Mineki, Eiji**
**3-5-9-409, Ogawahigashi-cho**
**Kodaira-shi Tokyo(JP)**
Inventor: **Matsuda, Hideki**
**2-23, Takamatsu Toshima-ku**
**Tokyo(JP)**
Inventor: **Takahashi, Hidenori**
**555-86, Kamihirose**
**Sayama-shi Saitama-ken(JP)**

(74) Representative: **TER MEER - MÜLLER - STEINMEISTER & PARTNER**
**Mauerkircherstrasse 45**
**W-8000 München 80(DE)**

# EP 0 209 125 B1

**Description**

FIELD OF THE INVENTION

This invention relates to pneumatic tires and particularly to pneumatic tires which are operated on smooth surface roadways at high speed.

The invention especially relates to an improvement in tread rubber composition and tread rubber arrangement of large, oversized or giant, radial pneumatic tires for heavy-duty vehicles such as trucks, buses and the like.

DESCRIPTION OF THE PRIOR ART

Pneumatic tires operated on smooth surface roadways at high speed, particularly large, oversized or giant, radial pneumatic tires for heavy-duty vehicles having tread patterns of the rib type are generally required to have desirable general performances such as wear resistance performance, vehicular road-handling performance, braking performance and the like. For along continuous drive, the tread rubber of the tread portion is particularly required to have low heat generation or buildup, high resistance to uneven wear on the lateral edge or shoulder portions and high resistance to groove cracking at the bottoms of the circumferential main grooves. However, a tread rubber of one kind alone cannot provide all of such required performances. For this reason, the tread portion normally comprises some parts of different rubber kind so that the tread portion as a whole can meet as many as possible the performances that may be required.

A known tyre presenting these features, according to the preamble of claim 1, is shown e.g. in EP-A-0 142 857.

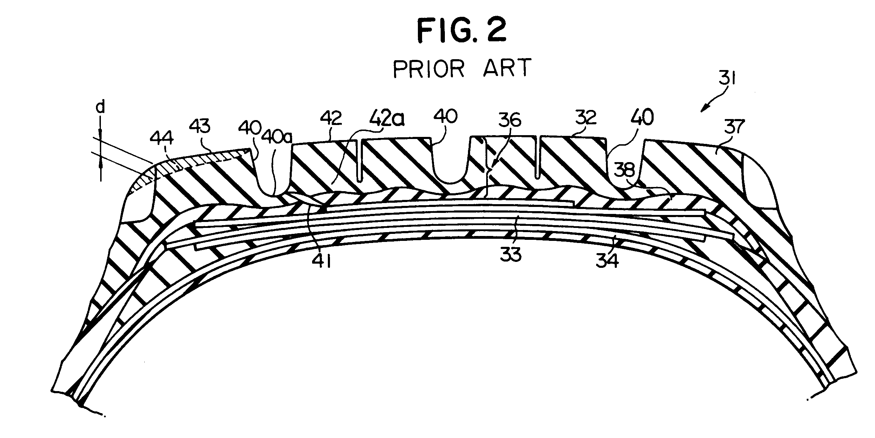

A conventional radial pneumatic tire 31 for heavy-duty vehicles such as trucks, buses and the like is shown in Fig. 2. The radial pneumatic tire 31 is substantially identical in construction to a known radial pneumatic tire and thus comprises a tread portion 32 with circumferential main grooves 40 extending circumferentially thereabout, a belt portion 33 disposed radially inwardly of the tread portion 32 and extending circumferentially, and a carcass portion 34 disposed radially inwardly of the belt portion 33 and extending between a pair of inextensible circular beads (not shown) and including a steel cord ply. A tread rubber 36 of the tread portion 32 includes a radially outer rubber layer 37 and a radially inner rubber layer 38. The radially outer rubber layer 37 is an outer tread rubber compound which is composed of natural rubber occupying 80 percent by weight of the outer tread rubber compound and polystyrene/butadiene rubber occupying 20 percent by weight of the outer tread rubber compound. The radially outer rubber layer 37 has a resilient coefficient of 50 at a normal temperature of 15°C and a rupture energy of 430 kg/cm$^2$ at a temperature of 100°C. Also, the radially outer rubber layer 37 has better wear resistance performance and better wet braking performance. Further, since the radially outer rubber layer 37 occupies a large portion (approximately 80 percent) of the tread rubber 36 of the tread portion 32 as shown in Fig. 2, the radial pneumatic tire 31 has the sufficient effect of the wear resistance performance and wet braking performance. The radially inner rubber layer 38 is an inner tread rubber compound which is composed of natural rubber occupying 100 percent by weight of the inner tread rubber compound, and has a rupture energy of 250 kg/cm$^2$ at 100°C, a resilient coefficient of 75 at a normal temperature, and an extremely low heat generation or buildup. Therefore, the radial pneumatic tire 31 has the sufficient effect of the low heat generation or buildup though the radially inner rubber layer 38 occupies only a small portion (approximately 20 percent) of the tread rubber 36 of the tread portion 32.

However, in the radial pneumatic tire 31 having the aforementioned tread rubber 36, a crack 41 occurs in a groove bottom 40a of the circumferential main groove 40 and a rib bottom 42a of a central rib 42 of the tread portion 32 tears, during use of the tire at high speed under load. Namely, there is the drawback of a so-called rib tearing. Further, there is also another drawback that the tread rubber 36 cannot satisfactorily prevent uneven wear 44 (indicated by oblique lines in Fig. 2) from occurring in a shoulder rib 43 located at laterally outermost edge portion of the tread portion 32.

It is accordingly an important object of the present invention to provide an improved radial pneumatic tire which prevents rib tearing and has an extremely reduced uneven wear throughout the tread life, without substantially degrading low heat generation performance of the tread portion.

SUMMARY OF THE INVENTION

In accordance with an important aspect of the present invention, there is provided a radial pneumatic tire for heavy-duty vehicles comprising a tread portion formed with a plurality of circumferential main

2

grooves each extending circumferentially of the tire and including a radially outer tread rubber layer and a radially inner tread rubber layer, the radially outer tread rubber layer being an outer tread rubber compound which is composed of, based upon 100 parts by weight rubber, 25 to 75 percent polyisoprene rubber selected from the group consisting of natural rubber and a synthetic polyisoprene rubber, and correspondingly, 75 to 25 percent polystyrene/butadiene rubber, the radially inner tread rubber layer being an inner tread rubber compound which is composed of, based upon 100 parts by weight rubber, 100 to 75 percent polyisoprene rubber selected from the group consisting of natural rubber and a synthetic polyisoprene rubber, and correspondingly, 0 to 25 percent polystyrene/butadiene rubber, characterized in that the radially inner tread rubber layer has a resilient coefficient of from 50 to 70 at a normal temperature of 15°C and a rupture energy of not less than 400 kg/cm$^2$ at a temperature of 100°C, a boundary between the radially outer tread rubber layer and the radially inner tread rubber layer is disposed radially inwardly of a plane which is located at a position of about 1/2 of the groove depth of each of the circumferential main grooves and radially outwardly of the bottom portion of each of the circumferential main grooves, and wear resistances of the radially outer and inner tread rubber layers are substantially equal to each other within ± 10 percent tolerance. For purpose of describing this invention, "circumferential main grooves" refer to grooves which extends circumferentially of the tire and are widest and deepest.

## BRIEF DESCRIPTION OF THE DRAWINGS

The drawbacks of a conventional radial pneumatic tire and the features and advantages of a radial pneumatic tire according to the present invention will be more clearly understood from a consideration of the following detailed description taken in conjunction with the accompanying drawings in which:

FIG. 1 is a fragmentary cross sectional view showing a radial pneumatic tire constructed in accordance with a preferred embodiment of the present invention, and

FIG. 2 is a fragmentary cross sectional view of a conventional radial pneumatic tire.

## DETAILED DESCRIPTION OF THE PREFERRED EMBODIMENT

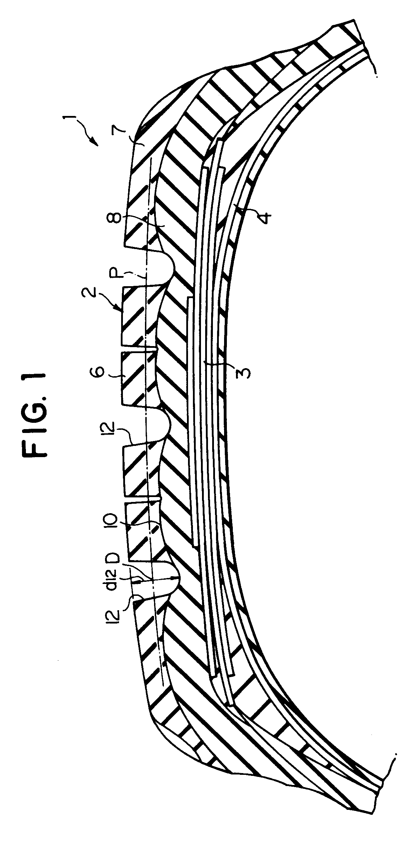

Referring now to FIG. 1 of the accompanying drawings, a radial pneumatic tire constructed in accordance with a preferred embodiment of the present invention is generally designated by reference numeral 1. The radial pneumatic tire 1 comprises a tread portion 2 with a plurality of circumferential main grooves 12 extending circumferentially thereabout, a belt portion 3 disposed radially inwardly of the tread portion 2 and extending circumferentially, and a carcass portion 4 disposed radially inwardly of the belt portion 3 and extending between a pair of inextensible circular beads (not shown) and including a steel cord ply. Other portions are substantially identical in construction to a known radial pneumatic tire and therefore the description thereof will hereinafter be omitted. A tread rubber 6 forming the tread portion 2 comprises two layers consisting of a radially outer tread rubber layer 7 (cap rubber) and a radially inner tread rubber layer 8 (base rubber). The term "radially" refers to a direction perpendicular to the rotational axis of the tire.

The radially outer tread rubber layer 7 (cap rubber) is of an outer tread rubber compound which is composed of polyisoprene rubber selected from the group consisting of natural rubber and a synthetic polyisoprene rubber, and polystyrene/butadiene rubber wherein the weight ratio is 25/75 to 75/25, preferably 40/60 to 70/30. Namely, the outer tread rubber compound is composed of, based upon 100 parts by weight rubber, 25 to 75 percent, preferably 40 to 70 percent polyisoprene rubber selected from the group consisting of natural rubber and a synthetic polyisoprene rubber, and correspondingly, 75 to 25 percent, preferably 60 to 30 percent polystyrene/butadiene rubber. In this embodiment, the radially outer tread rubber layer 7 is composed of 70 percent natural rubber and 30 percent polystyrene/butadiene rubber. The radially outer tread rubber layer 7 has a resilient coefficient of 50 at a normal temperature of 15°C and a rupture energy of 450 kg/cm$^2$ at 100°C. The "rupture energy" is intended to mean elastic energy (area of "stress-strain curve") per unit volume at the time of rupture.

The radially inner tread rubber layer 8 is preferred to be of an inner tread rubber compound which is composed of polyisoprene rubber selected from the group consisting of natural rubber and a synthetic polyisoprene rubber, and polystyrene/butadiene rubber wherein the weight ratio is 100/0 to 75/25. In this embodiment, the weight ratio is 100/0, that is, the radially inner tread rubber layer 8 is composed of, based upon 100 parts by weight rubber, 100 percent natural rubber and correspondingly, 0 percent polystyrene/butadiene rubber. Further, by relation with rubber composition and the like of the radially outer tread rubber layer 7, the wear resistances of the radially outer and inner tread rubber layers 7 and 8 are preferred to be substantially equal to each other within ± 10 percent tolerance. Thus, even if the radially inner tread rubber layer 7 is exposed at an early stage of wear, the radial pneumatic tire 1 according to the present invention has high resistance to wear and low heat generation because the amount of the radially inner tread rubber layer 8 is increased. The radially inner tread rubber layer 8 has a resilient coefficient of 50 to 70, preferably 58 to 65 at a normal temperature of 15°C and a rupture energy of not less than 400 kg/cm², preferably 400 to 600 kg/cm², at a temperature of 100°C. In this embodiment, the resilient coefficient is 62 and the rupture energy is 420 kg/cm². The resilient coefficient and rupture energy can be varied, for example, by varying the grade of carbon black which is added as a compounding ingredient. In addition, as shown in FIG. 1, the cross sectional area of the radially inner tread rubber layer 8 is 30 to 60, preferably 40 to 55, percent of the total cross sectional area of the tread rubber 6 of the tread portion 2. In this embodiment, the cross sectional area of the radially inner tread rubber layer 8 is 50 percent of the total cross sectional area of the tread rubber 6 of the tread portion 2.

A boundary 10 between the radially outer tread rubber layer 7 and the radially inner tread rubber layer 8 is disposed radially inwardly of a plane P which is located at a position D of 1/2 of a groove depth $d_{12}$ of each of the circumferential main grooves 12 and radially outwardly of a bottom portion of each of the circumferential main grooves 12. It is desirable that the boundary 10 be 1/2 to 1/4 of the groove depth $d_{12}$.

While it has been described and illustrated in the aforementioned embodiment of the present invention that the tread rubber 6 of the tread portion 2 includes the radially outer tread rubber layer 7 and the radially inner tread rubber layer 8, it should be noted that a relatively thin rubber layer may be provided radially inwardly of the radially outer tread rubber layer 7 and the radially inner tread rubber layer 8.

The operation of the pneumatic radial tire according to the present invention will hereinafter be described in detail.

In pneumatic tires for heavy-duty vehicles operated on smooth surface roadways at high speed, excessive heat generation and excessive heat buildup occur in the interior of the tread portion due to compressive strain repeatedly produced in the tread portion during use of the tire under load. However, in the present invention, although the resilient coefficient of the radially inner tread rubber layer of the tread portion is 50 to 70 and thus slightly lower as compared with the resilient coefficient (75) of the radially inner rubber layer of the conventional tire, in accordance with the present invention the amount of the radially inner tread rubber layer is increased as compared with the conventional tire and the cross sectional area thereof is 30 to 60 percent of the total cross sectional area of the tread rubber of the tread portion. Accordingly, the tread portion of the pneumatic tire constructed in accordance with the present invention has a very satisfactory low heat generation by relation with the amount of the radially outer tread rubber layer which is inferior in heat generation resistance.

The reason why the resilient coefficient of the radially inner tread rubber layer is 50 to 70 is that, in the case of less than 50, the heat generation becomes excessively high and thus the resistance to heat generation decreases, and in the case of not less than 70, a rupture characteristic decreases because of the problem of the rubber composition and thus the tire is not suitable for practical use.

The reason why the cross sectional area of the radially inner tread rubber layer is 30 to 60 percent of the total cross sectional area of the tread rubber is as follows. In the case of not more than 30 percent, the heat generation resistance and the rib tear resistance become degraded. On the other hand, in the case of not less than 60 percent, the radially inner tread rubber layer is exposed at an early stage of wear and the uneven wear resistance becomes degraded.

During use of a pneumatic tire on smooth surface roadways at high speed under heavy load, the groove bottoms of the tread portion repeatedly expand and contract and become fatigued, cracks occur from the groove bottoms in the radially outer tread rubber layer, and further the cracks extend radially inwardly and finally the rib bottom of the radially inner tread rubber layer ruptures. However, in the present invention, since the rupture energy of the radially inner tread rubber layer is not less than 400 kg/cm² and thus extremely large as compared with the the rupture energy (250 kg/cm²) of the radially inner rubber layer of the conventional tire, no ruptures occur in the radially inner tread rubber layer of the present invention. There is accordingly no occurrence of groove cracks and rib tears.

The reason why the rupture energy is not less than 400 kg/cm² is that, in the case of less than 400 kg/cm², the effect of prevention of occurrence of rib tear is very small.

Furthermore, in the radial pneumatic tire of the present invention, the radially outer tread rubber layer of the tread portion has the weight ratio of the polyisoprene rubber (selected from the group consisting of natural rubber and a synthetic polyisoprene rubber) and the polystyrene/butadiene rubber, which is from 25/75 to 75/25. Thus, since the weight ratio of the polystyrene/butadiene rubber is greater, the aforementioned uneven wear is effectively prevented. Namely, in the case the weight ratio of the polystyrene/butadiene rubber is less than 25 percent by weight, the effect of prevention of uneven wear cannot be satisfactorily obtained. In the case of the weight ratio of the polystyrene/butadiene rubber is not less than 75 percent by weight, the effect of prevention of rib tearing cannot be satisfactorily obtained.

The following examples illustrate but do not limit the practice of the present invention.

EXAMPLE I

A comparative tire A and an experimental tire B were prepared and tested. The tires A and B were built, shaped and cured in a conventional tire mold, and each have a tire size of 12 R 22.5. The comparative tire A is substantially identical in construction to the aforementioned conventional tire (FIG. 2). The experimental tire B is substantially identical in construction to the aforementioned embodiment (FIG. 1) according to the present invention. The compounds of the cap portion (radially outer tread rubber layer) and the base portion (radially inner tread rubber layer) of the tires A and B are shown in TABLE I, wherein all parts or percentages are based upon 100 parts by weight rubber. In TABLE I, the resilient coefficient is measured at a normal temperature of 15°C. The rupture energy is measured at a temperature of 100°C in accordance with ASTM (1975) D-142. As stated above, the rupture energy means elastic energy (area of "stress-strain curve") per unit volume at the time of rupture. The resistance to wear is tested in accordance with the Pico wear test method (ASTM (1969) D-2228) and the worn volume is measured. The test value of the resistance to wear for the cap compound (radially outer tread rubber layer) of the comparative tire A were normalized to a value of 100 for comparison purposes. The test values of the resistance to wear for the base compound (radially inner tread rubber layer) of the comparative tire A and for the cap and base compounds of the experimental tire B were compared to the value of the comparative tire A and reported relative to the normalized value of 100 for the cap compound of the comparative tire A as shown TABLE I.

TABLE I

| | COMPARATIVE TIRE A (FIG. 2) | | EXPERIMENTAL TIRE B (FIG. 1) | |
|---|---|---|---|---|
| | Cap portion | Base portion | Cap portion | Base portion |
| Components Compd.$B_1$ | Compd.$C_d$ | Compd.$B_d$ | Compd.$C_1$ | |
| Natural rubber | 80 | 100 | 70 | 100 |
| Synthetic polyisoprene rubber | --- | --- | --- | --- |
| Polystyrene/butadiene rubber (SBR 1500 rubber) | 20 | --- | 30 | --- |
| Carbon black N-550 | --- | 40 | --- | --- |
| Carbon black N-121 | 50 | --- | 50 | --- |
| Carbon black N-234 | --- | --- | --- | 45 |
| Heavy aroma oil | 5 | --- | 5 | --- |
| Stearic acid | 3 | 3 | 3 | 3 |
| Antioxidant (Wing stay 100*) | 0.5 | 0.5 | 0.5 | 0.5 |
| Antiozonant (Santo flex 13**) | 1 | 1 | 1 | 1 |
| Zinc oxide | 4 | 3 | 4 | 3 |
| Accelerator (Cyclohexylbenzthiazyl sulphenamide) | 0.8 | 1 | 0.8 | 1 |
| Diphenyl guamidine | 0.6 | --- | 0.6 | --- |
| Sulfer | 1.6 | 1.5 | 1.6 | 1.5 |
| Resilient coefficient | 50 | 75 | 50 | 62 |
| Rupture energy (kg/cm$^2$) | 430 | 250 | 450 | 420 |
| Resistance to wear | 100 | 65 | 105 | 104 |

(Note: Wing stay 100* is made by the Goodyear Tire & Rubber Company, and Santo flex 13** is made by the Monsanto Ind. Chemicals Co.)

The comparative tire A and the experimental tire B were mounted on a truck for a heavy-duty vehicle and it was driven 70,000 km on smooth surface roadway under controlled conditions. The test values for the comparative tire A were normalized to a value of 100 for comparison purposes. The test values for the experimental tire B were compared to the values of the comparative tire A and reported relative to the normalized values of 100 for the comparative tire A as shown TABLE II.

TABLE II

| TEST | TEST RESULTS | |
|---|---|---|
| | COMPARATIVE TIRE A | EXPERIMENTAL TIRE B |
| Heat generation resistance | 100 | 100 |
| Tread wear resistance | 100 | 128 (Better) |
| Rib tear resistance | 100 | 250 (Better) |

The heat generation resistance was compared by the temperature generated in the shoulder portion.

The tread wear resistance was compared by a reduction d (shown in FIG. 2) in the shoulder surface.

The rib tear resistance was compared by the number of cracks and the length in the groove bottom.

Thus, the experimental tire according to the present invention, as compared with the conventional tire, demonstrated improved tread wear resistance and rib tear resistance, without substantially degrading the heat generation resistance.

Further, the comparative tire A and the experimental tire B were tested after a travel of 150,000 km on smooth surface roadway under controlled conditions. Although the radially inner tread rubber layer of the present invention was exposed, the tread wear resistance was substantially equal to that of the conventional tire.

EXAMPLE II

Experimental tires C and D and a comparative tire E were prepared and tested. The tires C, D and E were built, shaped and cured in a conventional tire mold, and each have a tire size of 12 R 22.5. The experimental tires C and D and the comparative tire E are substantially identical in construction to the aforementioned embodiment (FIG. 1) according to the present invention except for the compounds of the tread portion. The compounds of the cap portion (radially outer tread rubber layer) and the base portion (radially inner tread rubber layer) of the tires C, D and E are shown in TABLE III, wherein all parts and percentages are by weight. In TABLE III, the resilient coefficient is measured at a normal temperature of $15°C$. The rupture energy is measured at a temperature of $100°C$ in accordance with ASTM (1975) D-142. As stated above, the rupture energy means elastic energy (area of "stress-strain curve") per unit volume at the time of rupture. The resistance to wear is tested in accordance with the Pico wear test method (ASTM (1969) D-2228) and the worn volume is measured. The test values of resistance to wear for the experimental tires C and D and the comparative tire E were compared to the value of the comparative tire A and reported relative to the normalized value of 100 for the comparative tire A.

TABLE III

| Components | EXPERIMENTAL TIRE C (FIG. 1) | | EXPERIMENTAL TIRE D (FIG. 1) | | COMPARATIVE TIRE E (FIG. 1) | |
| --- | --- | --- | --- | --- | --- | --- |
| | Cap Compd. C$_2$ | Base Compd. B$_2$ | Cap Compd. C$_3$ | Base Compd. B$_3$ | Cap Compd. C$_4$ | Base Compd. B$_4$ |
| Natural rubber | 30 | 80 | 30 | 80 | 20 | 80 |
| Synthetic poly-isoprenerubber | 20 | 20 | --- | 20 | --- | 20 |
| Polystyrene/ butadiene rubber (SBR 1500 rubber) | 50 | --- | 70 | --- | 80 | --- |
| Carbon black N-550 | --- | --- | --- | --- | --- | --- |
| Carbon black N-121 | 50 | --- | 50 | --- | 50 | --- |
| Carbon black N-234 | --- | 45 | --- | 45 | --- | 45 |
| Heavy aroma oil | 5 | --- | 5 | --- | 5 | --- |
| Stearic acid | 3 | 3 | 3 | 3 | 3 | 3 |
| Antioxidant | 0.5 | 0.5 | 0.5 | 0.5 | 0.5 | 0.5 |
| Antiozonant | 1 | 1 | 1 | 1 | 1 | 1 |
| Zinc oxide | 4 | 3 | 4 | 3 | 4 | 3 |
| Accelerator | 0.8 | 1 | 0.8 | 1 | 0.8 | 1 |
| Diphenyl guamidine | 0.6 | --- | 0.6 | --- | 0.6 | --- |
| Sulfer | 1.6 | 1.5 | 1.6 | 1.5 | 1.6 | 1.5 |
| Resilient coefficient | 46 | 63 | 41 | 63 | 39 | 63 |
| Rupture energy (kg/cm$^2$) | 427 | 416 | 405 | 416 | 360 | 416 |
| Resistance to wear | 98 | 102 | 96 | 102 | 89 | 102 |

The aforementioned experimental tires C and D and the comparative tire E were tested in regard to rib tear resistance. Each of the tires C, D and E is mounted on a truck for a heavy-duty vehicle and it was driven a predetermined distance on a normal test course at speed of 60 mile/hr. After the predetermined distance, the tire is passed through a particular surface for rib tear resistance having a plurality of projections of 4 inch high at low speed. This is repeated 36 times and then the rib tear resistance was measured and compared by the Rib tear failure and the length of crack in the groove bottom. The test

8

results are shown in TABLE IV.

TABLE IV

| TEST | TEST RESULTS | | |
|---|---|---|---|
| | EXPERIMENTAL TIRE C | EXPERIMENTAL TIRE D | COMPARATIVE TIRE E |
| Rib tear failure<br>Length of crack (mm) | not occurred<br>0 | not occurred<br>10-20 | occurred<br>could not be measured |

Thus, the experimental tires C and D according to the present invention, as compared with the comparative tire E, demonstrated improved rib tear resistance. Namely, as mentioned above, in the case of the weight ratio of the polystyrene/butadiene rubber of the cap compound is not less than 75 percent by weight, the effect of prevention of rib tearing cannot be satisfactorily obtained.

From the foregoing description, it will be seen that, in accordance with present invention, an improved radial pneumatic tire is provided which prevents rib tearing and has an extremely reduced uneven wear throughout the tread life, without substantially degrading low heat generation performance of the tread portion.

## Claims

1. A radial pneumatic tire for heavy-duty vehicles comprising a tread portion (2) formed with a plurality of circumferential main grooves (12) each extending circumferentially of said tire and including a radially outer tread rubber layer (7) and a radially inner tread rubber layer (8),

   said radially outer tread rubber layer (7) being an outer tread rubber compound which is composed of, based upon 100 parts by weight rubber, 25 to 75 percent polyisoprene rubber selected from the group consisting of natural rubber and a synthetic polyisoprene rubber, and correspondingly, 75 to 25 percent polystyrene/butadiene rubber,

   said radially inner tread rubber layer (8) being an inner tread rubber compound which is composed of, based upon 100 parts by weight rubber, 100 to 75 percent polyisoprene rubber selected from the group consisting of natural rubber and a synthetic polyisoprene rubber, and correspondingly, 0 to 25 percent polystyrene/butadiene rubber,
   **characterized in that**

   said radially inner tread rubber layer (8) has a resilient coefficient of from 50 to 70 at a normal temperature of 15°C and a rupture energy of not less than 400 kg/cm$^2$ at a temperature of 100°C,

   a boundary (10) between said radially outer tread rubber layer (7) and said radially inner tread rubber layer (8) is disposed radially inwardly of a plane (P) which is located at a position of about 1/2 of the groove depth of each of said circumferential main grooves (12) and radially outwardly of the bottom portion of each of said circumferential main grooves (12), and

   wear resistances of said radially outer and inner tread rubber layers (7,8) are substantially equal to each other within ± 10 percent tolerance.

## Revendications

1. Pneumatique du type radial destiné à des véhicules fortement chargés comprenant une partie formant bande de roulement (2) formée avec plusieurs gorges principales (12) circonférentielles, chacune s'étendant à la circonférence du pneumatique, et comprenant une couche (7) de caoutchouc formant bande de roulement radialement extérieure et une couche (8) de caoutchouc formant bande de roulement radialement intérieure,
   la couche (7) de caoutchouc formant bande de roulement radialement extérieure étant une composition formant caoutchouc de bande de roulement extérieure qui est constituée, sur la base de 100 parties en poids de caoutchouc, de 25 à 75 % de caoutchouc polyisoprène choisi dans le groupe consistant en caoutchouc naturel et en caoutchouc polyisoprène synthétique, et de manière correspondante, de 75 à 25 % de caoutchouc polystyrène-butadiène, la couche (8) de caoutchouc formant bande de roulement radialement intérieure étant une composition de caoutchouc de bande de roulement intérieure qui est constituée, sur la base de 100 parties en poids de caoutchouc, de 100 à 75 % de caoutchouc polyisoprène choisi dans le groupe consistant en caoutchouc naturel et en caoutchouc polyisoprène synthétique, et de manière correspondante, de 0 à 25 % de caoutchouc polystyrène butadiène,

caractérisé en ce que la couche (8) de caoutchouc formant bande de roulement radialement intérieure a un coefficient élastique de 50 à 70 à une température normale de 15°C et une énergie de rupture d'au moins 400 kg/cm$^2$ à une température de 100°C, une zone de liaison (10) entre la couche (7) de caoutchouc formant bande de roulement radialement extérieure et la couche (8) de caoutchouc formant bande de roulement radialement intérieure est située radialement vers l'intérieur d'un plan (P) qui est situé à une position d'environ la moitié de la profondeur de gorge de chacune des gorges (12) principales circonférentielles et radialement vers l'extérieur de la partie de fond de chacune des gorges (12) principales circonférentielles, et

les résistances à l'usure des couches (7, 8) de caoutchouc formant bandes de roulement radialement intérieure et extérieure sont sensiblement égales l'une à l'autre avec une tolérance de plus ou moins 10 %.

**Patentansprüche**

1. Pneumatischer Radialreifen für Schwerfahrzeuge mit einem Laufflächenbereich (2), der mit einer Vielzahl in Umfangsrichtung verlaufenden Hauptnuten (12) versehen ist, und einer radialen äußeren Laufflächenkautschukschicht (7) und einer radialen inneren Laufflächenkautschukschicht (8), wobei die radiale äußere Laufflächenkautschukschicht (7) eine äußere Laufflächenkautschukmischung ist, die, bezogen auf 100 Gewichtsteile Kautschuk, aus 25 bis 75% Polyisoprenkautschuk (ausgewählt aus der Gruppe, die aus Naturkautschuk und synthetischem Polyisoprenkautschuk besteht), und entsprechend 75 bis 25% Polystyrol/Butadien-Kautschuk aufgebaut ist,

   die radiale innere Laufflächenkautschukschicht (8) eine innere Laufflächenkautschukmischung ist, die, bezogen auf 100 Gewichtsteile Kautschuk, aus 100 bis 75% Polyisoprenkautschuk, ausgewählt aus der Gruppe, die aus Naturkautschuk und synthetischem Polyisoprenkautschuk besteht, und entsprechend 0 bis 25% Polystyrol/Butadien-Kautschuk aufgebaut ist, **dadurch gekennzeichnet**, daß die radiale innere Laufflächenkautschukschicht (8) einen Elastizitätskoeffizienten von 50 bis 70 bei einer normalen Temperatur von 15°C und eine Bruchenergie von nicht weniger als 400 kg/cm$^2$ bei einer Temperatur von 100°C aufweist,

   eine Grenzschicht (10) zwischen der radialen äußeren Laufflächenkautschukschicht (7) und der radialen inneren Laufflächenkautschukschicht (8) radial innerhalb einer Ebene (P) angeordnet ist, die in einem Bereich von etwa 1/2 der Nutentiefe der in Umfangsrichtung verlaufenden Hauptnuten (12) und radial außerhalb des unteren Bereiches einer jeder der in Umfangsrichtung verlaufenden Hauptnuten (12) liegt, und

   die Verschleißbeständigkeiten der radialen äußeren und inneren Laufflächenkautschukschichten (7, 8) im wesentlichen zueinander mit einer Toleranz von ± 10% gleich sind.

FIG. 1

FIG. 2
PRIOR ART